(19) Europäisches Patentamt
European Patent Office
Office européen des brevets

(11) Veröffentlichungsnummer: **0 109 967**
**A1**

(12) # EUROPÄISCHE PATENTANMELDUNG

(21) Anmeldenummer: **82110949.3**

(22) Anmeldetag: **26.11.82**

(51) Int. Cl.³: **C 02 F 1/46**

(43) Veröffentlichungstag der Anmeldung: **13.06.84**
**Patentblatt 84/24**

(84) Benannte Vertragsstaaten: **AT BE CH FR GB IT LI NL SE**

(71) Anmelder: **Kunz, Gerhard, Dipl.-Chem. Dr. Ing.,**
**Ruhrstrasse 111, D-5628 Heiligenhaus (DE)**

(72) Erfinder: **Kunz, Gerhard, Dipl.-Chem. Dr. Ing.,**
**Ruhrstrasse 111, D-5628 Heiligenhaus (DE)**

(74) Vertreter: **Merten, Fritz, Hallerhüttenstrasse 6,**
**D-8500 Nürnberg 40 (DE)**

(54) **Verfahren zur Entkarbonisierung von Wasser.**

(57) Die Erfindung betrifft ein Verfahren zur Entkarbonisierung von Wasser unter Oberführung der Bikarbonation in Karbonationen, wobei die in den natürlich vorkommenden Wässern gelösten Inhaltsstoffe mittels elektrischer Energie chemisch so verändert werden, daß sie mit den im Wasser enthaltenen Bikarbonationen zu Karbonationen reagieren, und diese chemische Veränderung in einem Reaktor (1) erfolgt, der mittels ionendurchlässiger Membranen (2) in Zellen unterteilt und mit Elektroden (3, 4) für die Energiezuführung versehen ist.

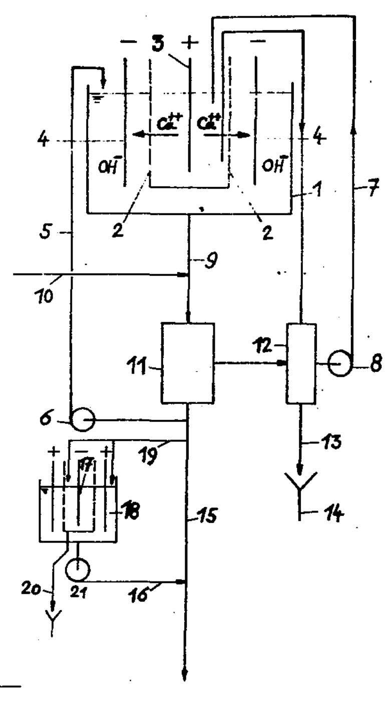


EP 0 109 967 A1

# Verfahren zur Entkarbonisierung von Wasser

Die Erfindung bezieht sich auf ein Verfahren zur Entkarbonisierung von Wasser, wobei das Bikarbonationen enthaltende Wasser durch ein Reaktionsgefäß geleitet wird, in dem die Bikarbonationen in Karbonationen umgewandelt werden.

Das für den industriellen Bedarf verwendete Wasser muß in fast allen Anwendungsfällen praktisch frei von Calciumbikarbonat sein, weil sonst unerwünschte Reaktionen, wie z.B. Kesselsteinbildung, beim Erhitzen des Wassers zu Störungen in Apparaturen und Anlagen führen.

Es ist in der Wasseraufbereitung seit langem bekannt, durch Zusätze von Chemikalien das Calciumbikarbonat in eine wasserunlösliche Verbindung überzuführen oder das Calcium in seiner ionogenen Form durch Natriumionen oder Wasserstoffionen zu ersetzen. Die seit langem bekannten Verfahren zeigen jedoch aus heutiger Sicht Nachteile, so z.B. alle Fällungsverfahren, die große Mengen an Chemikalien erfordern, insbesondere Calciumoxid; sie benötigen einen erheblichen Aufwand für den Antransport der Chemikalien, für die Lagerung, für die Dosierung und für die chemische Umsetzung mit dem Bikarbonat. Die deshalb fast ausschließlich praktizierten Ionenaustauschverfahren erfordern weniger Aufwand, bewirken aber eine von den Behörden und der Allgemeinheit nicht mehr akzeptierte Aufsalzung der Gewässer, also eine schwere Umweltbelastung. Dabei kann die Aufsalzung der Wässer bis zu 400 % erreichen. Schwerwiegende Nachteile anderer Art ergeben sich vor allem dort, wo keine Chemikalien zur Verfügung stehen, beispielsweise in ariden Gebieten für den Betrieb von Meerwasserentsalzungsanlagen. Bevor das

./.

Meerwasser in derartigen Anlagen aufkonzentriert wird, z.B. durch Erhitzen in den Verdampfern, muß ebenfalls entkarbonisiert werden, um den Betrieb überhaupt zu ermöglichen. In solchen Fällen ist es sogar lebensnotwendig, die Entkarbonisierung ohne Zudosierung von Chemikalien bewerkstelligen zu können.

Hier setzt die Erfindung ein, der die Aufgabe zugrunde liegt, mit Hilfe elektrischer Energie und ohne Chemikalienzugabe von außen die im Wasser enthaltenen Bikarbonationen in Karbonationen umzuwandeln, diese zumKristallisieren und/oder zum Zerfall zu bringen und somit eine Kesselsteinbildung beim Erhitzen oder andere Störungen zu vermeiden.

Gemäß der Erfindung wird diese Aufgabe dadurch gelöst, daß die in den natürlich vorkommenden Wässern gelösten Inhaltsstoffe mittels elektrischer Energie chemisch so verändert werden, daß sie mit den im Wasser enthaltenen Bikarbonationen zu Karbonationen reagieren, wobei diese chemische Veränderung in einem Reaktor erfolgt, der mittels ionendurchlässiger Membranen in Zellen unterteilt und mit Elektroden für die Energiezuführung versehen ist.

Durch diese Umwandlung der in den natürlich vorkommenden Wässern enthaltenen Stoffe und deren Reaktion mit dem Bikarbonat zu kontrolliert eliminierbaren Folgeprodukten wird nicht nur die der Erfindung zugrunde liegende Aufgabe vorteilhaft gelöst, sondern es wird zudem erreicht, daß die dafür notwendigen apparativen Einrichtungen unkompliziert aufgebaut sind und ein in hohem Maße betriebsicheres Verhalten haben. Ein weiterer Vorteil ist, daß für die an sich bekannten Membranen weder eine chemische noch eine thermische Überbelastung auftritt. Als besonderer Vorteil ist zu verzeichnen, daß nach dem erfindungsgemäßen Verfahren an den Stofftransportflächen, also den

./.

Membranen, keine Ablagerungen und Verkrustungen entstehen können. Es kommt ferner als Vorteil hinzu, daß Umwandlung und chemische Reaktion mit dem Bikarbonat von der Spaltung und/oder der Kristallisation getrennt ist und damit beide Verfahrensschritte unbeeinflußt voneinander optimiert werden können. Ein anderer, wesentlicher Vorteil ist, daß die Umwandlung und Umsetzung in dem erfindungsgemäßen Reaktor sowohl in die alkalische (OH-Reaktor) als auch in die saure Richtung (H-Reaktor) erfolgen kann, woraus sich wieder die vorteilhafte Möglichkeit ergibt, den einen Reaktortyp für die Eliminierung des Bikarbonats und den anderen für die Konditionierung des behandelten Wassers zu verwenden. Es ist ferner auf vorteilhafte Weise möglich, die Umwandlungsprodukte der gegenpoligen Zellen zur Konditionierung dem Produktwasser zuzugeben. Das erfindungsgemäße Verfahrne zeichnet sich ferner dadurch aus, daß beim OH-Reaktor Produktwasser, also entkarbonisiertes Wasser, durch den Kathodenraum fließt, beim H-Reaktor dagegen Rohwasser.

Eine vorteilhafte Weiterbildung der Erfindung zeichnet sich dadurch aus, daß beim Typ OH-Reaktor der Anodenflüssigkeit in einem Kreislauf der aus dem Rohwasser auskristallisierte Feststoff, CaCO (Calciumkarbonat( zugegeben wird. Eine andere, ebenfalls vorteilhafte Weiterbildung der Erfindung zeichnet sich dadurch aus, daß beim Typ H-Reaktor der Kathodenraum kontinuierlich durchspült wird und die gebildeten Feststoffe außerhalb der Zelle abgeschieden werden. Ferner ist von Vorteil, daß beim OH-Reaktor die Calciumkarbonat-Rückführung durch Rohwasser ersetzt werden kann, wenn im Rohwasser die Natriumkonzentration äquivalentmäßig dem zu entfernenden Bikarbonatanteil entspricht. Eine wesentliche Weiterbildung der Erfindung besteht darin, daß evtl. auftretende Verkrustungen an den Elektroden und/oder an den

./.

Membranen durch Umkehr der Wanderungsrichtung der Ionen mittels Umpolung beseitigt werden können.

Eine besonders wichtige Weiterbildung der Erfindung betrifft die Entkarbonisierung von Wässern, die überwiegend andere Anionen als Bikarbonationen enthalten, insbesondere solche, die noch vor der Wasserstoffionenbildung entladen werden. Diese Weiterbildung besteht darin, daß mittels Membranen das Abwandern der Anionen sowohl aus dem Kathodenraum als auch aus dem Anodenraum verhindert wird, nicht aber das Wandern der Kationen, so daß zwischen den Membranen ein Reaktionsraum für die Entkarbonisierung entsteht.

Eine andere Weiterbildung der Erfindung besteht darin, Elektroden und Membranen in einer Folge von Grundeinheiten anzuordnen, wobei das jeweilige Verfahrensprinzip den Aufbau der Grundeinheit bestimmt.

In den Zeichnungen sind drei Ausführungsbeispiele der Erfindung schematisch dargestellt. Es zeigt:

Fig. 1 einen Längsmittelschnitt durch einen OH-Reaktor und das Fließschema

Fig. 2 einen Längsmittelschnitt durch einen H-Reaktor und das Fließschema

Fig. 3 einen Längsmittelschnitt durch einen H-Reaktor mit anodischer und kathodischer Sperrmembran für Anionen und das Fließschema.

In einem Behälter 1 befindet sich eine kationendurchlässige und anionensperrende Membran 2, durch die nur ein Ionentransport aber nicht ein Flüssigkeitsaustausch erfolgen kann. Die treibende Energiedifferenz für den

./.

Ionentransport erzeugen die Anode 3 und die, z.B. zylindrisch angebrachte, Kathode 4. Durch die Leitung 5 wird ständig mittels der Pumpe 6 Produktwasser in den Kathodenraum geleitet, durch die Leitung 7 dagegen mittels der Pumpe 8 Calciumkarbonat-Suspension in den Anodenraum. Im Verlauf der elektrochemischen Reaktion wandern die Calciumionen aus dem Anodenraum von der Anode 3 weg durch die Membran 2 hindurch in den Kathodenraum zu der Kathode 4. An der Anode 3 werden Wasserstoffionen gebildet, die mit den Karbonat-Anionen letztlich nach folgendem Schema reagieren:

[1] $$2\ H^+ + CO_3^{--} \longrightarrow H_2O + CO_2\uparrow$$

wobei als Zwischenreaktion für die Auflösung des rückgeführten Calciumkarbonates die Bekarbonatbildung mittels des oben entstandenen Kohlendioxide von Bedeutung ist:

[2] $$CaCO_3 + CO_2 + H_2O \longrightarrow Ca(HCO_3)_2$$

und dann, unter Abwanderung der Calciumionen, spaltet sich das dissoziierte $HCO_3^-$ -Ion unter Wasserstoffioneneinwirkung, woraus sich die summarische Beziehung (1) ergibt.

An der Kathode werden über die Entladung der Metallionen letztlich Hydroxylionen gebildet nach der Beziehung:

[3] $$Ca + 2\ H_2O \longrightarrow Ca^{++} + 2\ OH^- + H_2\uparrow$$

Dieses Calciumhydroxid gelangt über die Leitung 9 zum Rohwasser, das durch die Leitung 10 zugeführt wird.
Nach der Mischung beider Reaktanden bildet sich aus dem Calciumbikarbonat weitgehend unlösliches Calciumkarbonat:

$$[4] \quad 2Ca^{++} + 2OH^{-} + 2\ HCO_3^{-} \longrightarrow 2\ CaCO_3\downarrow + 2H_2O$$

das im Kristaller 11 abgeschieden und der Pumpenvorlage 12 als Suspension zugeleitet wird. Diese wird wieder zum Teil mittels der Pumpe 8 und durch die Leitung 7, wie oben beschrieben, in den Anodenraum zurückgeführt. Da bei der Kristallisation mehr Calciumkarbonat entsteht, als für die Rückführung benötigt wird, wird der Überschuß durch die Leitung 13 abgeleitet, beispielsweise in den Kanal 14.

Zur pH-Regulierung wird dem Produktwasser in derLeitung 15 durch die Leitung 16 saures Wasser in der gewünschten Menge zugegeben. Es wird in einer der erfindungsgemäßen Anordnung analogen Anordnung erzeugt, in der jedoch die Elektroden gegenpolig geschaltet sind. Dabei wird sowohl in den von der kationendurchlässigen Membran umschlossenen innenliegenden Kathodenraum 17, als auch in den außenliegenden Anodenraum 18 Produktwasser durch die Leitung 19 zugegeben und aus dem Anodenraum 18 durch die Leitung20 mit hydroxylionen angereicherte Kathodenflüssigkeit ausgeschleust. Die mit Wasserstoffionen angereicherte Anodenflüssigkeit wird in der erforderlichen Menge mittels der Pumpe 21 durch die Leitung 16 in die Produktwasser führende Leitung 15 gegeben, wodurch sich der gewünschte pH-Wert einstellt.

In Fig. 2 ist eine gegenpolig geschaltete Anordnung dargestellt. In einem Behälter 1′ befindet dsich eine kationendurchlässige und anionensperrende Membran 2 , durch die nur ein Ionen-, aber nicht ein Flüssigkeitsaustausch erfolgen kann. Die treibende Energiedifferenz für den Ionentransport erzeugen die Kathode 3 und die, beispielsweise zylindrisch angebrachte, Anode 4 . Durch die Leitung 5 wird der zu entkarbonisierende Rohwasserstrom in den Anodenraum 6 geleitet. Durch die Leitung 7 gelangt ein anderer Rohwasseranteil in den Kathodenraum 8 . Im Verlauf der elektrochemischen Reaktion wandern die Calcium- und Natriumionen des Rohwassers aus dem Anodenraum 6 von der Anode 4' weg, durch die Membran 2' hindurch in den Kathodenraum 8'. An der Anode 4' werden Wasserstoffionen gebildet, die mit dem im Rohwasser enthaltenen Bikarbonationen wie folgt reagieren:

$$[5] \quad H^{+} + HCO_3^{-} \longrightarrow H_2O + CO_2\uparrow$$

Dieses, nun Kohlendioxid enthaltende Wasser, gelangt durch die Leitung 9' in den Entgaser 10', wo das Kohlendioxid auf bekannte Weise, beispielsweise durch Einblasen von Luft, ausgetrieben und durch die Leitung 11' abgeleitet wird. Das entkarbonisierte und von gelöstem Kohlendioxid befreite Wasser fließt als Produkt durch die Leitung 12'.

An der Kathode 3' werden über die Entladung der Meallionen Hydroxylionen gebildet nach den Beziehungen:

$$[6] \quad Ca + 2H_2O \longrightarrow Ca^{++} + 2OH^{-} + H_2\uparrow$$

$$[7] \quad 2\ Na + 2\ H_2O \longrightarrow 2\ Na^{+} + 2OH^{-} + H_2\uparrow$$

Die Kathodenflüssigkeit wird mittels der Pumpe 13' als innerer Kreislauf durch die Leitung 14' umgewälzt, wobei auskristallisierte oder ausgefallene Feststoffe im Abscheider 15' abgetrennt und durch die Leitung 16' entfernt werden. Ein Teilstrom 17' des Hydroxylionen enthaltenden Kreislaufes wird zur pH-Regulierung in die Produktwasserleitung 12' gegeben. Diese Ausschleusungen 16' und 17' aus dem Kreislauf 14' werden durch entsprechende Zugabe frischen Rohwassers durch die Leitung 7' in den Kathodenraum 8' ergänzt.

./.

In Fig. 3 ist das Fließschema einer Anordnung mit anodischer und kathodischer Sperrmembran für Anionen dargestellt. In einem Behälter 1" befinden sich zwei kationendurchlässige und anionensperrende Membranen 2" und 3", durch die nur Ionentransport aber kein Flüssigkeitsaustausch erfolgen kann. Dabei begrenzt die Membran 2" den Anodenraum 4" mit der Anode 5" und die Membran 3" begrenzt den Kathodenraum 6" mit der Kathode 7". Zwischen den beiden Membranen 2" und 3" befindet sich der Reaktionsraum 8" in den der zu entkarbonisierende Rohwasserstrom 9" eingeleitet wird. Im Verlauf der elektrochemischen Reaktion wnadern Metallionen, beispielsweise die Kationen des Natriums und Calciums, aus dem Reaktionsraum 8" durch die Membran 3" in den Kathodenraum 6", werden an der Kathode 7" entladen und reagieren mit dem Wasser nach den bereits dargestellten Beziehungen (6) und (7). Die Kathodenflüssigkeit wird mittels einer Pumpe 10" als innerer Kreislauf durch die Leitung 11" umgewälzt, wobei auskristallisierte oder ausgefallene Feststoffe im Abscheider 12" abgetrennt und mit einem Teil der Kathodenflüssigkeit durch die Leitung 13" ausgeschleust werden. Ein Teilstrom 14" des Hydroxylionen enthaltenden Kreislaufs wird zur pH-Regulierung in die Produktwasserleitung 15" gegeben.

Die Ausschleusungen 13" und 14" aus dem Kreislauf 11" werden durch entsprechende Zugabe von Produktwasser 16" ergänzt. An der Anode 5 " werden Ani9nen entladen, wobei die im entladenen Zustand beständigen gasförmig entweichen, wie z.B. die Chloridionen in Form von Chlor, und die nicht beständigen, wie z.B. entladene Sulfationen, mit dem Wasser nach der Beziehung reagieren:

$$[8] \quad SO_4 + H_2O \longrightarrow 2\,H^+ + SO_4^{--} + O\nearrow$$

./.

Die erzeugten Wasserstoffionen wandern von der Anode 5" weg, durch die Membran 2" hindurch in den Reaktionsraum 8", wo die Umsetzung mit den Bikarbonationen nach der Beziheung (5) erfolgt. Dieses, nun Kohlendioxid gelöst enthaltende Wasser, gelangt durch die Leitung 17" in den Entgaser 18", wo das Kohlendioxid auf bekannte Weise, z.B. durch Einblasen von Luft, ausgetrieben und durch die Leitung 19" abgeleitet wird.

Die Anodenflüssigkeit wird mittels der Pumpe 20" als innerer Kreislauf durch die Leitung 21" umgewälzt, wobei auskristallisierte oder ausgefallene Feststoffe im Abscheider 22" abgetrennt und ausgeschleust werden 23". Verluste werden durch Zugabe von Produktwasser 24" ergänzt.

0109967

Patentansprüche

=================

1. Verfahren zur Entkarbonisierung von Wasser unter Überführung der Bikarbonationen in Karbonationen, dadurch gekennzeichnet, daß die in den natürlich vorkommenden Wässern gelösten Inhaltsstoffe mittels elektrischer Energie chemisch so verändert werden, daß sie mit dem im Wasser enthaltenen Bikarbonationen zu Karbonationen reagieren, wobei diese chemische Veränderung in einem Reaktor erfolgt, der mittels ionendurchlässiger Membranen in Zellen unterteilt und mit Elektroden für die Energiezuführung versehen ist.

2. Verfahren nach dem Anspruch 1, dadurch gekennzeichnet, daß im Kathodenraum der Kathode (4) Hydroxylionen erzeugt, diese von der Anode (3) durch eine anionensperrende und kationendurchlässige Membran getrennt und mit den Bikarbonationen des Rohwassers zur Reaktion gebracht werden.

3. Verfahren nach den Ansprüchen 1 und 2, dadurch gekennzeichnet, daß eine ausreichende Metallionenkonzentration für die Hydroxylionenbildung durch Rückführung des ausgefällten Calciumkarbonates im Raum der Anode (3) erzeugt wird.

4. Verfahren nach den Ansprüchen 1 bis 3, dadurch gekennzeichnet, daß der Calciumkarbonatüberschuß aus dem Kreislauf (7) der Rückführung ausgeschleust wird (13, 14).

./.

5. Verfahren nach den Ansprüchen 1 bis 4, dadurch gekennzeichnet, daß Produktwasser in den Raum der Kathode (4) zurückgeführt wird.

6. Verfahren nach den Ansprüchen 1, 2, 4 und 5, dadurch gekennzeichnet, daß Rohwasser in den Raum der Anode (3) geleitet wird.

7. Verfahren nach den Ansprüchen 1 bis 6, dadurch gekennzeichnet, daß die Reinigung der Membranen durch Umkehr der Wanderungsrichtung der Ionen erfolgt.

8. Verfahren nach dem Anspruch 1, dadurch gekennzeichnet, daß einerseits im Anodenraum (6') Wasserstoffionen erzeugt und mit den Bikarbonationen des Rohwassers zur Reaktion gebracht werden, andererseits die im Kathoden raum (8') erzeugten Hydroxylionen mittels einer anionensperrenden und kationendurchlässigen Membran (2') an der Wanderung zur Anode und Reaktion mit den Wasserstoffionen gehindert werden.

9. Verfahren nach den Ansprüchen 1 und 8, dadurch gekennzeichnet, daß das zu entkarbonisierende Rohwasser (5') durch den Anodenraum (6') geleitet wird.

10. Verfahren nach den Ansprüchen 1, 8 und 9, dadurch gekennzeichnet, daß die Kathodenflüssigkeitin einem Kreislauf (14') zngewälzt wird, aus dem ausgefallene Feststoffe, beispielsweise Hydroxide, ausgeschleust werden (16').

11. Verfahren nach den Ansprüchen 1, 8, 9 und 10, dadurch gekennzeichnet, daß die von Feststoffen befreite Kathodenflüssigkeit (17') ganz oder teilweise in das entkarbonisierte Produktwasser (12') eingeleitet wird.

./.

12. Verfahren nach dem Anspruch 1, dadurch gekennzeichnet, daß eine kationendurchlässige und anionensperrende Membran (2") den Anodenraum (4") und eine ebensolche (3") den Kathodenraum (6") begrenzt, wobei zwischen beiden Membranen derReaktionsraum (8") für die Entkarbonisierung gebildet wird.

13. Verfahren nach den Ansprüchen 1 und 12, dadurch gekennzeichnet, daß im Anodenraum (4") nichtflüchtige Anionen den Elektrolyten darstellen.

14. Verfahren nach den Ansprüchen 1, 12 und 13, dadurch gekennzeichnet, daß die Elektrolytlösungen der Elektrodenräume (4", 6") aus dem Produktwasser (24", 16") entnommen werden.

15. Verfahren nach den Ansprüchen 1 und 12 bis 14, dadurch gekennzeichnet, daß die Konzentration an Hydroxylionen im Kathodenraum (6") durch Ausschleusung von Kathodenflüssigkeit (13") eingestellt wird.

16. Verfahren nach den Ansprüchen 1 und 12 bis 15, dadurch gekennzeichnet, daß aus den Kreisläufen der Elektrodenflüssigkeiten (11", 21") Feststoffe abgetrennt und ausgeschleust werden (13", 23").

17. Verfahren nach den Ansprüchen 1 und 12 bis 16, dadurch gekennzeichnet, daß der rohwasserstrom (9") durch den Reaktionsraum (8") geleitet und seine Bikarbonationen mit den anodisch erzeugten Wasserstoffionen zur Reaktion gebracht werden.

18. Verfahren nach den Ansprüchen 1 bis 17 mit entsprechenden Elektroden- und Membrananordnungen, dadurch gekennzeichnet, daß große Einheiten aus einer alternierenden Folge von Grundeinheiten aufgebaut sind.

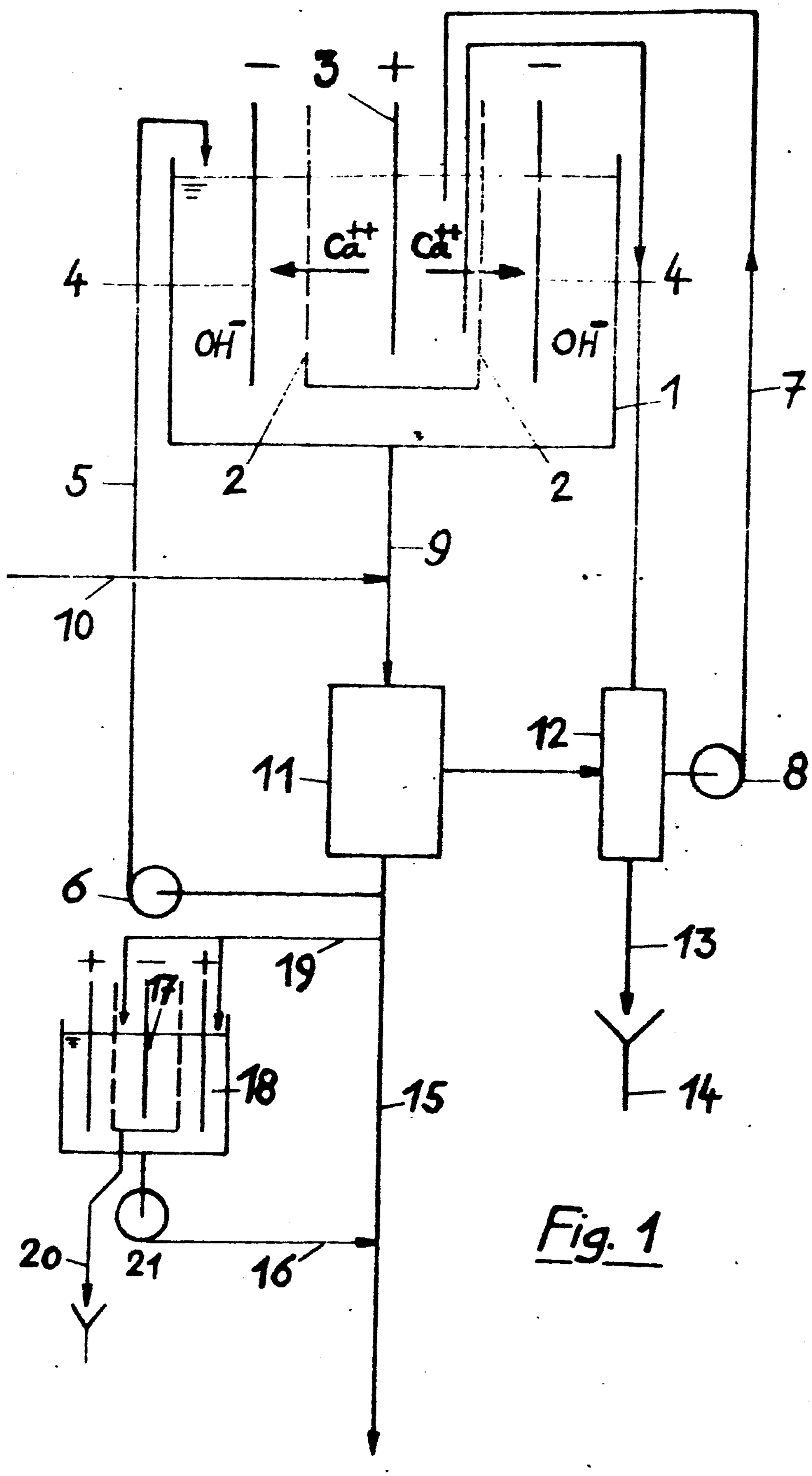


Fig. 1

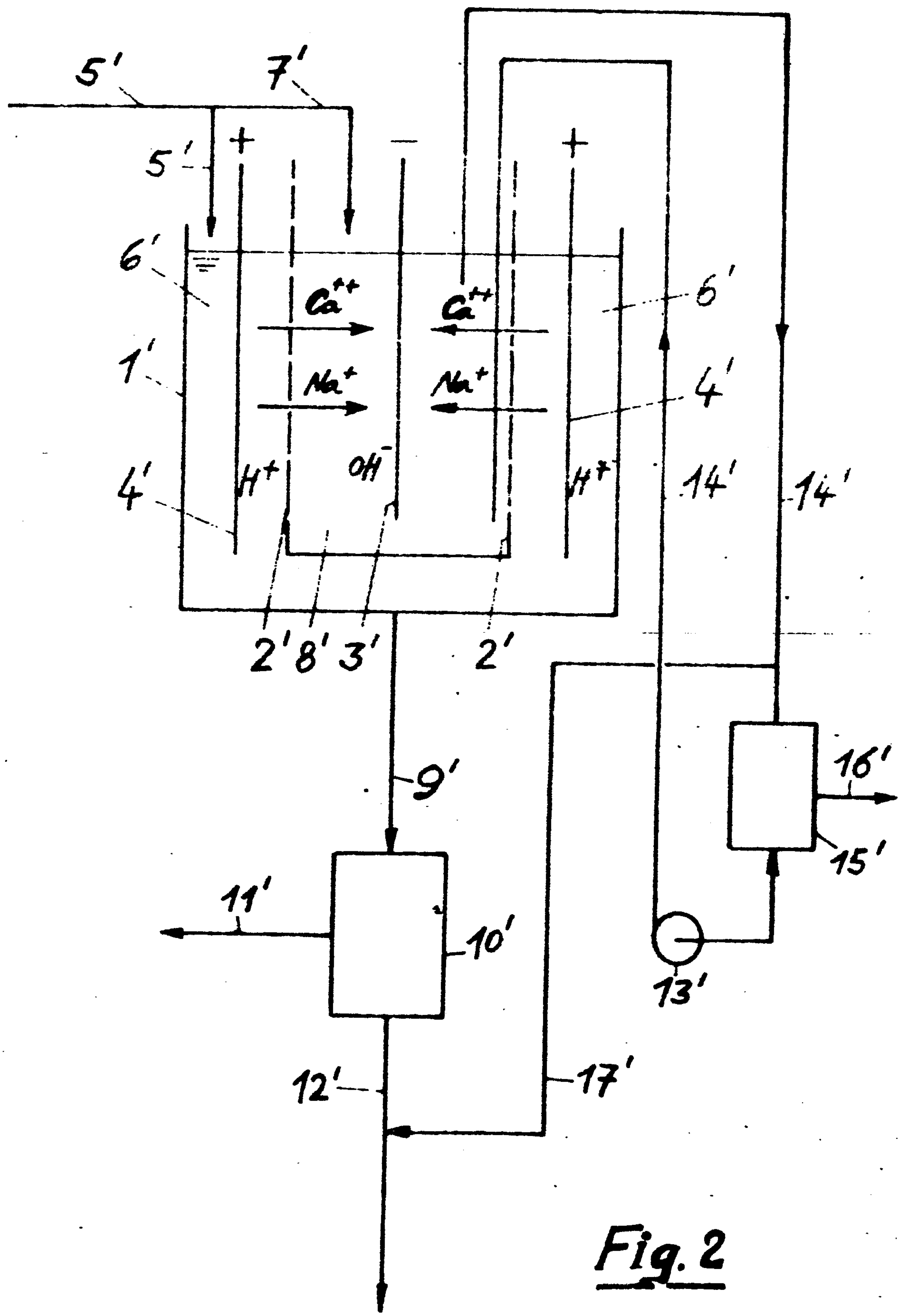


Fig. 2

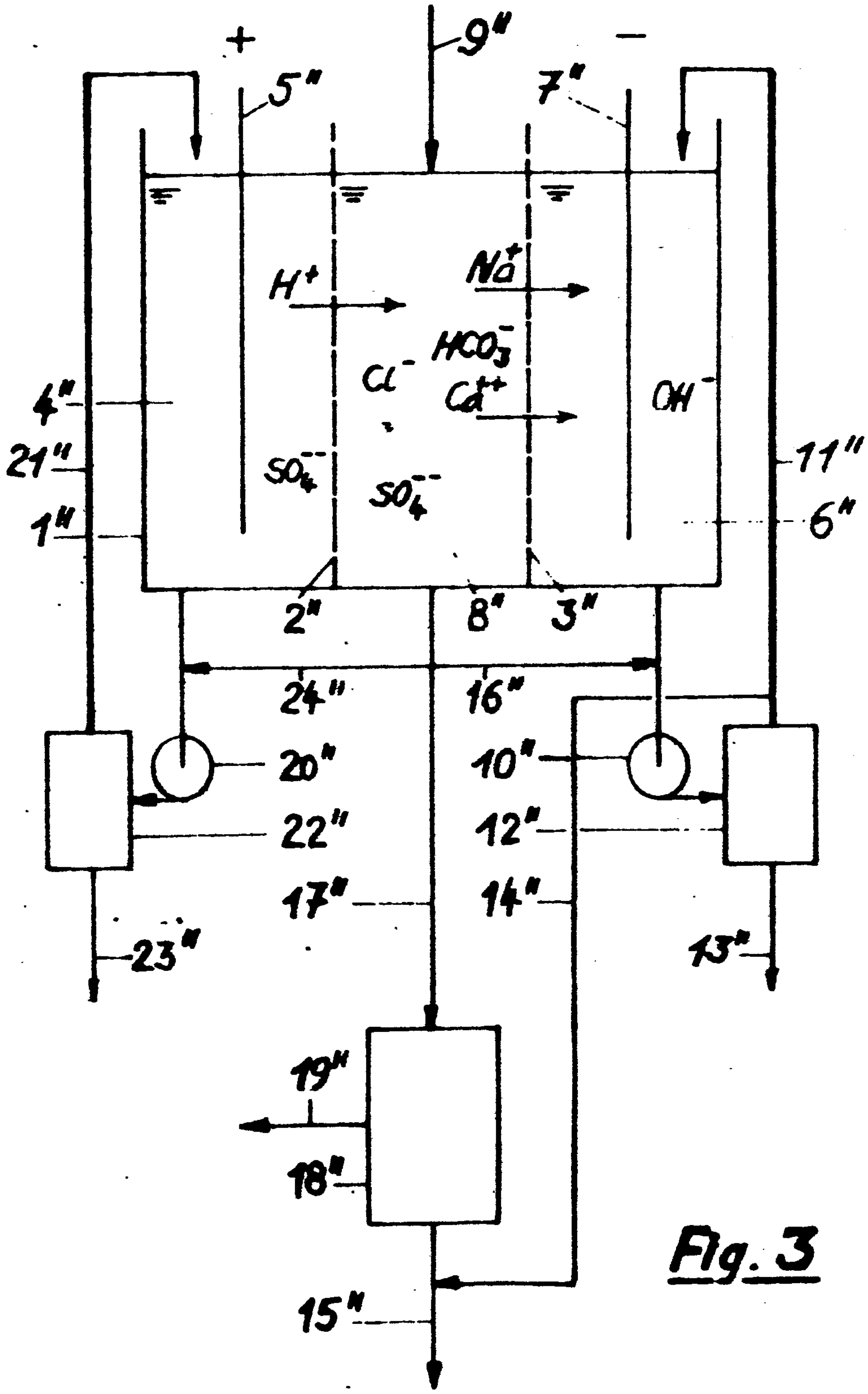
+
−
9"
5"
7"
H+
Na+
HCO3−
Cl−
Cd++
OH−
4"
21"
11"
1"
6"
SO4−−
SO4−−
2"
8"
3"
24"
16"
20"
10"
22"
12"
17"
14"
23"
13"
19"
18"
15"

Fig. 3

Europäisches Patentamt

# EUROPÄISCHER RECHERCHENBERICHT

0109967

Nummer der Anmeldung

EP 82 11 0949

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A- 822 990 (G. SCOTT & SON) * Insgesamt * | 1-18 | C 02 F 1/46 |
| X | FR-A-1 086 426 (CLAYTON) * Insgesamt * | 1-18 | |
| X | DE-C- 661 117 (OERLIKON) * Insgesamt * | 1-18 | |
| | | | RECHERCHIERTE SACHGEBIETE (Int. Cl. 3) |
| | | | C 02 F |

Der vorliegende Recherchenbericht wurde für alle Patentansprüche erstellt.

| Recherchenort | Abschlußdatum der Recherche | Prüfer |
|---|---|---|
| DEN HAAG | 19-08-1983 | VAN AKOLEYEN H.T.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82